# EUROPÄISCHE PATENTSCHRIFT

(11) **EP 0 803 954 B1**
(45) Veröffentlichungstag und Bekanntmachung des Hinweises auf die Patenterteilung: **01.08.2001**
(21) Anmeldenummer: 97106048.8
(22) Anmeldetag: 12.04.1997
(51) Int. Cl.: H02G 15/04, H01R 4/64, H02G 3/06

(54) **Kabelverschraubung**
Cable gland
Presse-étoupe pour câble

(30) Priorität: 19.04.1996 DE 19615603
(43) Veröffentlichungstag der Anmeldung: 29.10.1997
(73) Patentinhaber: U.I. Lapp Vermögensverwaltungs GmbH & Co. KG, 70565 Stuttgart (DE)
(72) Erfinder: Scholtheis, Bernd, 70567 Stuttgart (DE); Drotleff, Rolf, 71069 Sindelfingen (DE)
(74) Vertreter: Hoeger, Stellrecht & Partner

(56) Entgegenhaltungen:
- EP-A- 0 542 102
- DE-A- 4 316 903
- DE-U- 9 302 282
- DE-U- 9 318 581
- GB-A- 2 060 278
- US-A- 3 646 496
- US-A- 3 967 050

## Beschreibung

Die Erfindung betrifft eine Kabelverschraubung umfassend einen insbesondere an einem Gehäuse fixierbaren Stutzen, und ein mit dem Stutzen verschraubbares Schraubelement, durch welche ein Kabel durchgeführt ist.

Derartige Kabelverschraubungen sind aus dem Stand der Technik bekannt und dienen beispielsweise dazu, durch Pressung einer zusätzlich in einem Innenraum des Stutzens angeordneten und von dem Schraubelement beaufschlagbaren Dichtung das diese durchsetzende Kabel umfangsseitig abgedichtet aufzunehmen.

Das Problem derartiger Kabelverschraubungen besteht darin, daß bei mit einem Kabelschirm versehenen Kabeln eine direkte elektrische Verbindung zwischen Kabelschirm und Stutzen nicht möglich ist, sondern nur über die beispielsweise in dem Gerät vorgesehene und mit dem Kabel vorgesehene Schaltung erfolgt.

Eine Kabelverschraubung gemäß der Präambel des Anspruchs 1 ist in US-A-3 646 496 beschrieben.

Der Erfindung liegt die Aufgabe zugrunde, eine Kabelverschraubung der gattungsgemäßen Art derart zu verbessern, daß eine elektrische Verbindung zwischen dem Kabelschirm und dem Stutzen herstellbar ist, so daß insbesondere kein elektrischer Anschluß des Kabelschirms an das Gerät notwendig ist.

Diese Aufgabe wird bei einer Kabelverschraubung der eingangs beschriebenen Art erfindungsgemäß durch die Merkmale des Kennzeichnenden Teils des Anspruchs 1 gelöst.

Der Vorteil der erfindungsgemäßen Lösung ist darin zu sehen, daß durch das Einklemmen des Kabelschirms zwischen der Druckfläche und der Gegenfläche eine einfache Möglichkeit einer elektrischen Kontaktierung des Kabelschirms unabhängig von dem Durchmesser des Kabels und somit einer Verbindung zwischen diesem und dem Stutzen besteht und daß außerdem bei der erfindungsgemäßen Lösung das Schraubelement zur Erzeugung einer Kraft einsetzbar ist, welches so auf den Haltering einwirkt, daß dieser den Kabelschirm zwischen der Gegenfläche und der Kontaktfläche eingeklemmt hält und somit stets eine gute elektrische Verbindung zwischen Kabelschirm und dem Stutzen gewährleistet.

Besonders vorteilhaft ist es hierbei, wenn der Kabelschirm an dem Haltering fixierbar ist, da dadurch die Möglichkeit besteht, die erfindungsgemäße Kabelverschraubung in einfacher Weise dadurch zu montieren, daß zunächst eine Fixierung des Kabelschirms am Haltering erfolgt und dann der Haltering in den Stutzen eingesetzt und durch ein Drehen des Schraubelements beaufschlagt wird.

Hinsichtlich der Fixierung des Kabelschirms am Haltering wurden bislang keine näheren Angaben gemacht. So sind im Prinzip alle Möglichkeiten einer Fixierung denkbar. Besonders vorteilhaft ist es, wenn der Kabelschirm mittels eines Halteelements an dem Haltering fixierbar ist, da ein Halteelement eine einfache Möglichkeit darstellt, den Kabelschirm am Haltering zu fixieren. Hierbei ist zu bedenken, daß das Halteelement lediglich während des Montierens des erfindungsgemäßen Kabelverschraubung auf den Kabelschirm einwirken muß, jedoch nicht für einen dauerhaften elektrischen Kontakt zwischen Kabelschirm und Haltering verantwortlich ist.

Das Halteelement kann in beliebiger Art ausgebildet sein und beispielsweise eine ösenähnliche Aufnahme für die Drahtfilamente des Kabelschirms sein. Eine besonders kostengünstige Ausführungsform der erfindungsgemäßen Lösung sieht vor, daß das Halteelement ein Klemmelement ist, welches den Kabelschirm zwischen sich und dem Haltering festklemmt. Dadurch besteht in einfachster Weise die Möglichkeit, Klemmelement und Haltering ineinander oder übereinander zu schieben und dadurch zwischen diesen beiden den Kabelschirm festzuklemmen.

Um das Klemmelement vorteilhafterweise am Haltering zu fixieren, ist vorgesehen, daß der Haltering eine Vertiefung aufweist, in welche das Klemmelement den Kabelschirm in diesen eindrückend eingreift. Hiermit ist in einfacher Weise die Möglichkeit geschaffen, das Klemmelement am Haltering zu fixieren, die außerdem durch Eindrücken des Kabelschirms in die Vertiefung gleichzeitig zu einer vorteilhaften Fixierung des Kabelschirms am Haltering führt.

Um das Klemmelement in einfachster Weise am Haltering montieren zu können, ist vorgesehen, daß der Haltering zwischen der Vertiefung und der Druckfläche konisch verläuft, so daß über den konischen Verlauf des Halterings das Klemmelement in die Vertiefung einbringbar ist, wobei der konische Verlauf des Halterings dazu dient, das Klemmelement soweit zu deformieren, bis dieses mit der Vertiefung mit Spannung in Eingriff bringbar ist.

Im Zusammenhang mit der bisherigen Erläuterung der einzelnen Ausführungsbeispiele wurde nicht näher darauf eingegangen, auf welcher Seite des Halterings der Kabelschirm fixierbar ist. Beispielsweise wäre es möglich, den Kabelschirm auf einer Innenseite, also einer dem Kabel zugewandten Seite des Halterings zu fixieren. Dies könnte jedoch Probleme mit dem maximal möglichen Kabeldurchmesser aufwerfen. Aus diesem Grund ist vorteilhafterweise vorgesehen, daß der Kabelschirm auf einer dem Kabel abgewandten Außenseite des Halterings fixierbar ist und daß insbesondere bei Verwendung eines Klemmelements auch das Klemmelement auf der dem Kabel abgewandten Außenseite des Halterings montierbar ist.

Im Zusammenhang mit der bisherigen Erläuterung der einzelnen Ausführungsbeispiele wurde lediglich festgelegt, daß das Schraubelement auf den Haltering wirkt, um den Kabelschirm zwischen der Druckfläche des Halterings und einer Gegenfläche einzuklemmen. Es wurde jedoch nicht näher definiert, in welcher Weise das Schraubelement auf das Halteelement wirken soll. Beispielsweise wäre es im einfachsten Fall möglich, daß das Schraubelement selbst unmittelbar auf den Haltering einwirkt.

Ein besonders vorteilhaftes Ausführungsbeispiel sieht vor, daß zwischen dem Haltering und dem Schraubelement ein Druckelement angeordnet ist, welches die vom Schraubelement ausgehende Kraft auf den Haltering überträgt. Mit einem derartigen Druckelement besteht beispielsweise die Möglichkeit, bislang bekannte Kabelverschraubungen mit bislang bekannten Dimensionen der Stutzen einzusetzen.

Das Druckelement kann im einfachsten Fall ein starrer Körper, beispielsweise ein ringförmiger Körper sein, welcher vom Kabel durchsetzt ist und ausschließlich starr die Kraftwirkung vom Schraubelement auf das Halteelement überträgt.

Ein besonders vorteilhaftes Ausführungsbeispiel sieht jedoch vor, daß das Druckelement einen elastischen Kraftspeicher umfaßt. In diesem Fall dient vorzugsweise das Druckelement dazu, als elastischer Kraftspeicher stets den Haltering zu beaufschlagen und somit die Drahtfilamente des Kabelschirms zwischen der Druckfläche des Halterings und der Gegenfläche stets mit einer definierten Kraft beaufschlagt zu halten, so daß dadurch der durch das Einklemmen der Drahtfilamente des Kabelschirms zwischen Gegenfläche und Druckfläche des Halterings herstellbare elektrische Kontakt dauerhaft und zuverlässig aufrecht erhalten werden kann.

Ein derartiges als elastischer Kraftspeicher ausgebildetes Druckelement kann im einfachsten Fall durch einen Gummiring gebildet sein. Es wäre beispielsweise aber auch denkbar, einen derartigen elastischen Kraftspeicher durch einen Dichtungsringträger zu bilden, welcher elastisch deformierbar ist. Eine derartige elastische Deformierbarkeit eines Dichtungsringträgers kann beispielsweise über einen Lamellenkorb desselben erfolgen, welcher eine Dichtung umschließt und bei radialem Zusammenpressen auch eine Längselastizität zeigt.

Ein besonders vorteilhaftes Ausführungsbeispiel einer Kabelverschraubung sieht dabei vor, daß das Druckelement als eine vom Kabel durchsetzte Dichtung umfaßt. In diesem Fall dient das Druckelement nicht nur zur Übertragung der Kraft zwischen dem Schraubelement und dem Haltering, sondern gleichzeitig dazu, das Kabel in der Kabelverschraubung abzudichten.

Die elektrisch leitende Verbindung zwischen dem Stutzen und dem zwischen Druckfläche und Gegenfläche eingeklemmten Kabelschirm läßt sich in unterschiedlichster Art und Weise realisieren. So sieht ein vorteilhaftes Ausführungsbeispiel vor, daß die Gegenfläche eine mit dem Stutzen elektrisch leitend verbundene Kontaktfläche ist, so daß durch Andrücken des Kabelschirms an die Gegenfläche die elektrisch leitende Verbindung zwischen dem Kabelschirm und dem Stutzen hergestellt wird.

Die Gegenfläche selbst könnte unmittelbar selbst an den Stutzen angeformt sein. Beispielsweise könnte die Stützfläche die Gegenfläche bilden.

Ein besonders vorteilhaftes Ausführungsbeispiel sieht jedoch vor, daß die Kontaktfläche an einem in dem Innenraum liegenden und mit dem Stutzen elektrisch leitend verbundenen Kontaktring angeordnet ist. Ein derartiger Kontaktring schafft die Möglichkeit, einen Durchlaß desselben für das Kabel stets so zu dimensionieren, daß dieser abhängig von einem Querschnitt des durchzuführenden Kabels ist und somit innerhalb des Stutzens in einfacher Weise eine möglichst gute Abschirmung elektrischer Felder über den in Anpassung an die unterschiedliche Kabeldurchmesser zu wählenden Kontaktring vorzunehmen, ohne die anderen Teile der Kabelverschraubung abhängig vom Durchmesser des durchzuführenden Kabels dimensionieren zu müssen. Ein derartiger Kontaktring stellt ein einfaches und leicht in Anpassung an das jeweilige Kabel auszutauschendes Teil dar.

Der Kontaktring kann nun in unterschiedlichster Art und Weise in elektrischem Kontakt leitend mit dem Stutzen verbunden sein. Beispielsweise kann der Kontaktring im Innenraum des Stutzens so angeordnet sein, daß er in radialem elektrischem Kontakt mit dem Stutzen steht.

Ein anderes, besonders bevorzugtes Ausführungsbeispiel sieht jedoch vor, daß der Haltering mit der Druckfläche gegen einen sich an der Stützfläche abstützenden Kontaktring anlegbar ist und somit die mittels des Schraubelements erzeugte und die Drahtfilamente des Kabelschirms zwischen Druckfläche und Gegenfläche einklemmende Kraft nicht nur zum Einklemmen des Kabelschirms dient, sondern auch gleich dazu, den elektrischen Kontakt zwischen dem Kontaktring und dem Stutzen aufrechtzuerhalten, so daß auch dieser elektrische Kontakt zwischen Kontaktring und Stutzen langfristig und dauerhaft gewährleistet ist.

Darüber hinaus besteht mit dieser Lösung die Möglichkeit, aus dem Stand der Technik bekannte Kabelverschraubungen mit für die Druckfläche nicht geeignet angeordneten Stützflächen zu verwenden und mit einem Haltering sowie einem die Kontaktfläche bildenden und auf der Stützfläche aufliegenden Kontaktring zu versehen.

Vorzugsweise sitzt der Kontaktring lose in dem Stutzen und stützt sich axial an der Stützfläche ab.

Alternativ zum Vorsehen einer elektrisch leitend mit dem Stutzen verbundenen Kontaktfläche in Form einer Gegenfläche, bei welcher die Frage der Leitfähigkeit des Halterings selbst unerheblich ist, sieht ein anderes vorteilhaftes Ausführungsbeispiel vor, daß die Druckfläche des Halterings eine elektrisch leitend mit dem Stutzen verbundene Kontaktfläche bildet und somit über den Haltering selbst die elektrisch leitende Verbindung mit dem Stutzen hergestellt wird.

Im einfachsten Fall ist dies dadurch realisierbar, daß der Haltering selbst als elektrisch leitender Ring ausgebildet ist.

Beispielsweise ist es in diesem Fall von Vorteil, wenn der Haltering an der Stützfläche des Stutzens anliegt und somit die von dem Schraubelement entwickelte Kraft nicht nur den Schirm zwischen der Gegenfläche und der Druckfläche des Halterings eingeklemmt sondern gleichzeitig den Haltering selbst an die Stützfläche anpreßt und somit die elektrisch leitende Verbindung zwischen dem Haltering und dem Stutzen langfristig und zuverlässig aufrechterhält.

Die Ausbildung der Gegenfläche kann in diesem Fall beliebig sein. Beispielsweise ist es denkbar, daß die Gegenfläche durch eine entsprechende Fläche des Schraubelements gebildet ist oder beim Vorsehen eines Druckelements, daß die Gegenfläche durch das Druckelement selbst gebildet ist.

Es ist aber auch möglich, die Gegenfläche ebenfalls noch durch einen Kontaktring zu bilden, welcher in einfacher Weise an unterschiedliche Querschnitte des Kabels anpaßbar ist und somit dazu dienen kann, die Abschirmung der elektrischen Felder in der Kabelverschraubung zu verbessern.

Ein besonders vorteilhaftes Ausführungsbeispiel einer erfindungsgemäßen Kabelverschraubung sieht vor, daß die Dichtung eine aufgrund axialer Pressung sich in Richtung des Kabelaußenmantels deformierende Dichtung ist.

Vorzugsweise ist bei einem derartigen Ausführungsbeispiel das Schraubelement als Druckschraube ausgebildet.

Im einfachsten Fall sieht eine erfindungsgemäße Lösung vor, daß der Haltering selbst unmittelbar ein axiales Widerlager für die Dichtung bildet.

Es ist aber auch möglich, die erfindungsgemäße Kabelverschraubung mit einem in dem Stutzen einsetzbaren Dichtungsträgerkörper zu versehen, in welchen die Dichtung einsetzbar ist.

Beispielsweise ist der Dichtungsträgerkörper mit einem die Dichtung aufnehmenden Lamellenkorb versehen und das Schraubelement als den Lamellenkorb beaufschlagende Hutmutter ausgebildet.

Weitere Merkmale und Vorteile der Erfindung sind Gegenstand der nachfolgenden Beschreibung sowie der zeichnerischen Darstellung zweier Ausführungsbeispiele.

In der Zeichnung zeigen:
- Fig. 1: einen halbseitigen Längsschnitt durch ein erstes Ausführungsbeispiel einer erfindungsgemäße Kabelverschraubung mit einem durch diese hindurchgeführten Kabel;

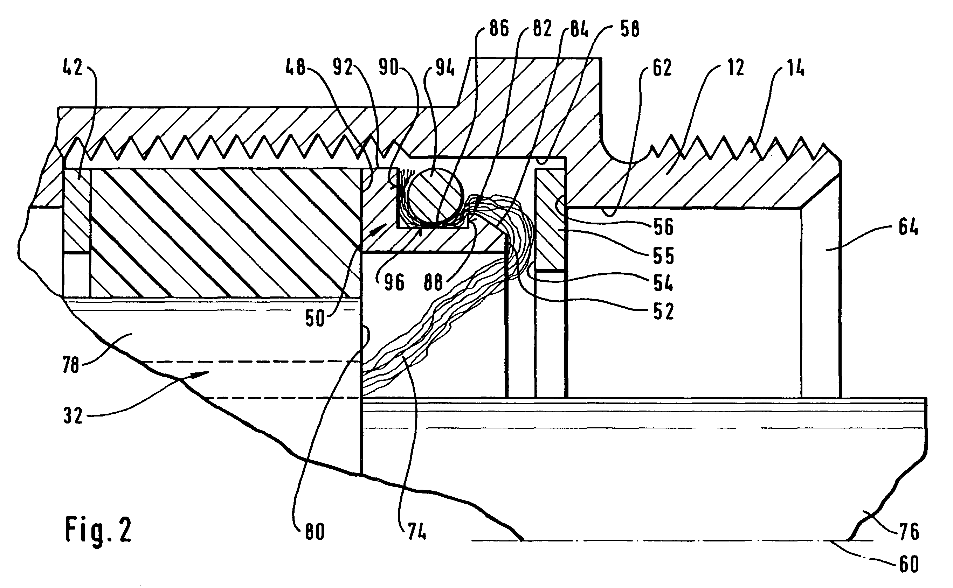

- Fig. 2: einen vergrößerten Längsschnitt durch die Kabelverschraubung gemäß Fig. 1 im Bereich des einen Halterings und
- Fig. 3: einen vergrößerten Längsschnitt ähnlich Fig. 2 durch ein zweites Ausführungsbeispiel.

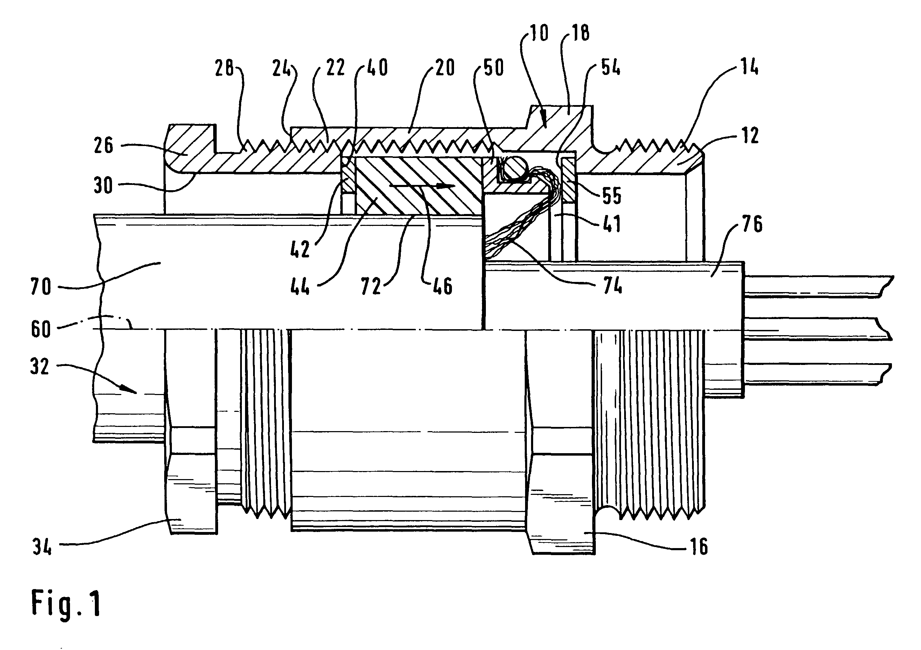

Ein Ausführungsbeispiel einer erfindungsgemäßen Kabelverschraubung, dargestellt in Fig. 1, umfaßt einen als Ganzes mit 10 bezeichneten elektrisch leitend ausgebildeten Stutzen, der einen zylindrischen Ansatz 12 mit einem Außengewinde 14 aufweist, welcher in ein im Gewinde eines mit der Kabelverschraubung zu versehenden Körpers, beispielsweise eines Durchbruchs eines Gehäuses, einschraubbar ist.

Ferner umfaßt der Stutzen 10 vorzugsweise im Anschluß an den zylindrischen Ansatz 12 einen mit Schlüsselflächen 16 versehenen Abschnitt 18 und einen auf einer dem zylindrischen Ansatz 12 gegenüberliegenden Seite des Abschnitts 18 angeordneten äußeren zylindrischen Körper 20, der mit einem Innengewinde 22 versehen ist, welches von einem dem Abschnitt 18 abgewandten Ende des zylindrischen Körpers 20 ausgehend sich in Richtung des Abschnitts 18 erstreckt.

In dieses Innengewinde 22 ist eine als Ganzes mit 26 bezeichnete Druckschraube mit ihrem Gewindeabschnitt 28 einschraubbar, wobei die Druckschraube 26 einen inneren Durchbruch 30 aufweist, durch welchen ein Kabel 32 hindurchführbar ist.

Ferner ist die Druckschraube 26 noch mit einem Schlüsselflächenabschnitt 34 versehen, welcher vorzugsweise auf einer dem zylindrischen Körper 20 abgewandten Seite des Gewindeabschnitts 28 angeordnet ist.

Die Druckschraube 26 wirkt mit einer stirnseitigen Druckfläche 40 auf einen in einem Innenraum 41 des Stutzens 10, vorzugsweise im Inneren des zylindrischen Körpers 20 und innerhalb des Innengewindes 22, angeordneten Druckring 42, welcher seinerseits eine ebenfalls im Inneren des zylindrischen Körpers 20 angeordnete Dichtung 44, vorzugsweise ausgebildet als Einschnittdichtung, in eine Richtung 46, welche in Richtung des Abschnitts 18 weist, beaufschlagt.

Die Dichtung 44 stützt sich dabei mit einer dem Druckring 42 gegenüberliegenden Stirnfläche 48 auf einem Haltering 50 ab und beaufschlagt diesen ebenfalls in Richtung 46, wobei dieser über eine Druckfläche 52 an einer als Gegenfläche wirkenden Kontaktfläche 54 eines Kontaktrings 55 abgestützt ist, welcher seinerseits an einer als Stützfläche wirkenden Flanschfläche 56 des Stutzens 10 anliegt, wobei die Flanschfläche 56 von einer inneren Zylinderfläche 58 der zylindrischen Körpers 20 radial in Richtung einer Längsachse 60 des Stutzens 10 übersteht und bis zu einer inneren Zylinderfläche 62 des zylindrischen Ansatzes 12 reicht, deren Zylinderradius kleiner ist als der der inneren Zylinderfläche 58 des zylindrischen Körpers 20. Die innere Zylinderfläche 62 reicht dabei bis zu einer Öffnung an einem dem Ende 24 gegenüberliegenden Ende 64 des Stutzens 10.

Das in die Kabelverschraubung einführbare Kabel 32 ist im Bereich seiner Außenmantelfläche 70 mittels der Dichtung 44 dadurch einklemmbar, daß die Dichtung 44 zwischen dem Druckring 42 und dem Haltering 50 mit axialer Pressung eingespannt wird und dadurch sich ein Durchmesser einer inneren Durchführungsöffnung 72 für das Kabel 32 verringert, so lange, bis die innere Durchführungsöffnung 72 mit ihren Rändern auf der Außenmantelfläche 70 dichtend anliegt.

Hierzu ist der Haltering 50 über den Kontaktring 55 an der Flanschfläche 56 des Stutzens 10 abzustützen.

Der Haltering 50 dient jedoch nicht ausschließlich als Widerlager für die in Richtung 46 mittels der Druckschraube 26 beaufschlagte Dichtung 44, sondern gleichzeitig dazu, einen Kontakt zwischen einem Schirm 74 des Kabels 32 und dem Stutzen 10 herzustellen, wobei der Schirm 74 des Kabels 32 einen Innenleiterbereich 76 des Kabels 32 umschließt, wobei der Innenleiterbereich 76 alle von dem Schirm 74 umschlossenen Kabelbestandteile umfaßt. Der Innenleiterbereich 76 kann dabei einen einzigen Leiter oder eine Vielzahl von voneinander getrennten Leitern aufnehmen.

Um eine Verbindung zwischen dem Schirm 74 und dem Haltering 50 herzustellen, wird ein den Schirm 74 umschließender Kabelmantel 78 entfernt, so daß eine Stirnfläche 80 des Kabelmantels 78 ungefähr bezogen auf die Längsachse 60 in gleicher Position wie die Stirnfläche 48 der Dichtung 44 liegt.

Der den Innenleiterbereich 76 umgebende Schirm 74 wird daher von diesem abgelöst, und radial nach außen über die Druckfläche 52 umgeschlagen, so daß einzelne Drahtfilamente des Schirms 74 über die Druckfläche 52 hinweglaufen und auf einer Außenseite 82 des Halterings 50 liegen.

Die Außenseite 82 des Halterings 50 umfaßt einen konischen Bereich 84, welcher sich im Anschluß an die Druckfläche 52 und von dieser weg konisch erweiternd bis zu einer Nut 86 erstreckt, die zum konischen Bereich 84 hin eine Stufe 88 als Nutwand aufweist und diese gegenüberliegend eine Nutwand 90, welche bis zu einer äußeren zylindrischen Fläche 92 des Halterings 50 verläuft, mit welcher dieser innerhalb der inneren Zylinderfläche 58 des Stutzens 10 geführt ist.

Zur Fixierung der einzelnen Drahtfilamente des Schirms 74 ist ein in die Nut 86 einlegbarer Klemmring 94 vorgesehen, welcher die einzelnen Drahtfilamente des Schirms 74, welche die Außenseite 82 des Halterings 50 übergreifen, in die Nut 86, und zwar in Richtung eines Nutbodens 96 derselben, hineindrückt und selbst aufgrund der Nutwände 88 und 90 gegen ein Herausgleiten aus der Nut 86 gesichert ist. Der Klemmring 94 ist dabei vorzugsweise als metallischer Sprengring ausgebildet, der Klemmring 94 kann jedoch aber auch ein nichtmetallischer Sprengring oder sogar auch ein O-Ring aus Gummi sein.

Durch die Fixierung der Drahtfilamente des Schirms 74 auf der Außenseite 82 des Halterings 50 mittels des Klemmrings 94 ist es möglich, den Schirm 74 vor Einführen des Halterings 50 in den Stutzen 10 zu fixieren, so daß dann die Einheit aus Kabel 32 mit dem am Haltering 50 fixierten Schirm 74 der dahinterliegenden Dichtung 44 und dem Druckring 42 in den Stutzen 10 vom Ende 24 her einführbar und mittels der in den Stutzen 10 einschraubbaren Druckschraube 26 in Richtung 46 beaufschlagbar ist, wobei dann der Haltering so lange nach vorne in Richtung des Kontaktrings 55 geschoben wird, bis die Druckfläche 52 unter Einklemmen der über die Druckfläche 52 hinwegverlaufenden Drahtfilamente des Schirms 74 zwischen der Druckfläche 52 und dem Kontaktring 55 an diesem anliegt, so daß eine Abstützung des Halterings 50 in axialer Richtung an der Flanschfläche 56 im Stutzen 10 erfolgt, wobei ein elektrischer Kontakt zwischen den Filamenten des Schirms 74 und dem Kontaktring 55 sowie dem Kontaktring 55 und dem Stutzen 10 herstellbar ist, und damit eine direkte elektrisch leitende Verbindung zwischen dem Stutzen 10 und dem Schirm 74 des Kabels 32 entsteht.

Ferner wird bei der erfindungsgemäßen Kabelverschraubung das elastische Verhalten der Dichtung 44 nicht nur dazu ausgenützt, diese mit ihrer Durchführungsöffnung 72 dichtend an der Außenmantelfläche 70 des Kabels 32 anzulegen, sondern auch gleichzeitig dazu als elastischer Kraftspeicher für die Beaufschlagung des Halterings und das Einklemmen der Drahtfilamente des Schirms 74 zwischen der Druckfläche 52 und dem Kontaktring 55 zu dienen, so daß ein ständiger elektrischer Kontakt zwischen dem Schirm 74, dem Kontaktring 55 und dem Stutzen 10 sichergestellt ist.

Bei einem alternativen Ausführungsbeispiel ist es außerdem noch vorteilhaft, zusätzlich noch die Druckschraube 26 mit einer Zugentlastung vorzusehen, die das Kabel 32 nochmals und zwar auf einer der Dichtung 44 abgewandten Seite des Gewindeabschnitts 28 klemmt.

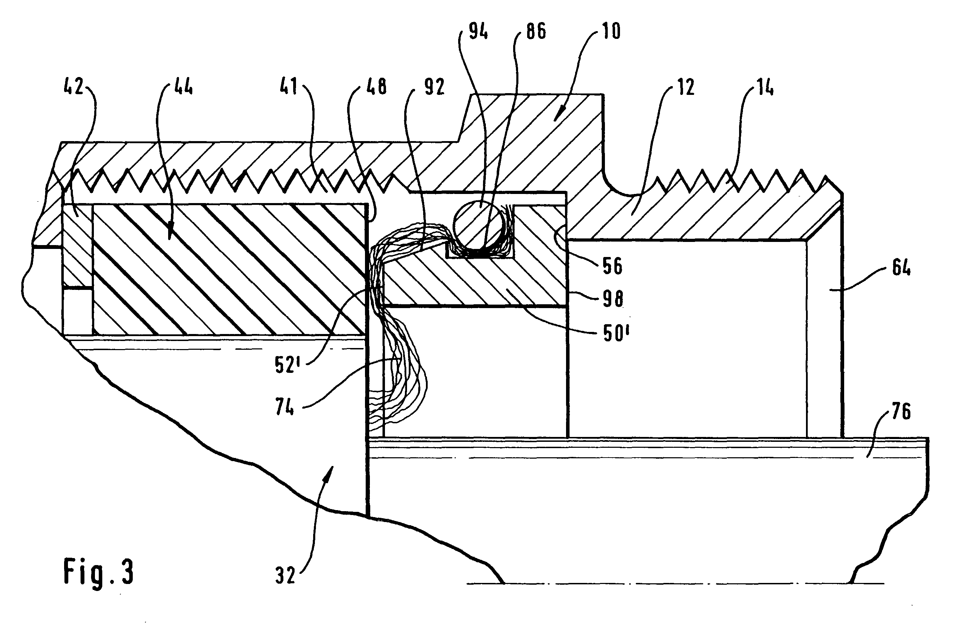

Bei einem zweiten Ausführungsbeispiel einer erfindungsgemäßen Kabelverschraubung, dargestellt in Fig. 3, sitzt der Haltering 50' umgekehrt eingesetzt in dem Innenraum 41 des Stutzens 10, so daß der Haltering 50' sich mit einer Flanschfläche 98 an der Stützfläche 56 abstützt. Dabei liegt die Druckfläche 52' auf einer der Stützfläche 56 abgewandten Seite und ist der als Druckelement wirkenden Dichtung 44, insbesondere der Stirnfläche 48 derselben, zugewandt. Die Stirnfläche 48 bildet nunmehr die Gegenfläche, so daß zwischen der Stirnfläche 48 und der Druckfläche 52' der Kabelschirm 74 einklemmbar ist. In diesem Fall ist der Haltering aus Metall und stellt somit eine elektrisch leitende Verbindung zwischen der als Kontaktfläche wirkenden Druckfläche 52' und dem Stutzen 10 über die Stützfläche 56 und die Flanschfläche 98 her. Im übrigen ist der Haltering 50' in gleicher Weise ausgebildet wie im Zusammenhang mit dem ersten Ausführungsbeispiel beschrieben, so daß für dieselben Elemente dieselben Bezugszeichen verwendet werden und auf die Ausführungen zum ersten Ausführungsbeispiel Bezug genommen werden kann. Mit gleicher Weise kann auch hinsichtlich der übrigen Merkmale der Kabelverschraubung auf die Ausführungen zum ersten Ausführungsbeispiel vollinhaltlich Bezug genommen werden.

Da die Dichtung 44 vielfach aus weichelastischem Material hergestellt ist, sieht eine Variante des zweiten Ausführungsbeispiels vor, zwischen der Stirnfläche 48 und den Drahtfilamenten des Kabelschirms 74 eine Ringscheibe einzusetzen, welche dann ihrerseits mit ihrer der Druckfläche 52' zugewandten Fläche die Gegenfläche für das Einklemmen der Drahtfilamente des Kabelschirms 74 zwischen dieser und der Druckfläche 52' bildet.

## Patentansprüche

1. Kabelverschraubung umfassend einen insbesondere an einem Gehäuse fixierbaren Stutzen (10), ein mit dem Stutzen (10) verschraubbares Schraubelement (26), einen in einem Innenraum (41) des Stutzens (10) zwischen dem Schraubelement (26) und einer Stützfläche (56) des Stutzens (10) einspannbaren Haltering (50), welcher durch das Schraubelement (26) in Richtung der Stützfläche (56) beaufschlagbar ist und welcher eine Druckfläche (52) aufweist, wobei der Stutzen (10), das Schraubelement (26) und der Haltering (50) dazu geeignet sind, ein Kabel (32) hindurchzuführen und einen von dessen Innenleiterbereich (76) nach außen geführten Kabelschirm (74) bei Beaufschlagung des Halterings (50) durch das Schraubelement (26) zwischen der Druckfläche (52, 52') des Halterings (50) und einer Gegenfläche (54, 48) zur Herstellung einer elektrisch leitenden Verbindung mit dem Stutzen (10) einzuklemmen,
**dadurch gekennzeichnet,** daß der Haltering (50) ein auf diesen aufsetzbares und mit diesem zu einer vormontierbaren Einheit verbindbares Halteelement aufweist, derart daß der über die Druckfläche (52, 52') hinweg verlaufende Kabelschirm (74) mittels des Halteelements an dem Haltering (50) vorfixierbar ist und nachfolgend beim Zusammenbau der Kabelverschraubung einklemmbar ist.

2. Kabelverschraubung nach Anspruch 1, dadurch gekennzeichnet, daß das Halteelement ein Klemmelement (94) ist, welches den Kabelschirm (74) zwischen sich und dem Haltering (50) festzuklemmen vermag.

3. Kabelverschraubung nach Anspruch 2, dadurch gekennzeichnet, daß der Haltering (50) eine Vertiefung (86) aufweist, in welche das Klemmelement (94) den Kabelschirm (74) eindrückend einzugreifen vermag.

4. Kabelverschraubung nach einem der Ansprüche 2 oder 3, dadurch gekennzeichnet, daß der Haltering (50) zwischen der Vertiefung (86) und der Druckfläche (52) konisch verläuft.

5. Kabelverschraubung nach einem der voranstehenden Ansprüche, dadurch gekennzeichnet, daß eine Außenseite (82) des Halterings (50) zum Fixieren des Kabelschirms (74) geeignet ist.

6. Kabelverschraubung nach einem der voranstehenden Ansprüche, dadurch gekennzeichnet, daß zwischen dem Haltering (50) und dem Schraubelement (26) ein Druckelement (44) angeordnet ist.

7. Kabelverschraubung nach Anspruch 6, dadurch gekennzeichnet, daß das Druckelement (44) einen elastischen Kraftspeicher umfaßt.

8. Kabelverschraubung nach Anspruch 7, dadurch gekennzeichnet, daß das Druckelement eine vom Kabel (32) durchsetzbare Dichtung (44) umfaßt.

9. Kabelverschraubung nach einem der voranstehenden Ansprüche, dadurch gekennzeichnet, daß die Gegenfläche eine mit dem Stutzen (10) elektrisch leitend verbundene Kontaktfläche (54) ist.

10. Kabelverschraubung nach Anspruch 9, dadurch gekennzeichnet, daß die Kontaktfläche (54) an einem in dem Innenraum liegenden und mit dem Stutzen (10) elektrisch leitend verbundenen Kontaktring (55) angeordnet ist.

11. Kabelverschraubung nach Anspruch 10, dadurch gekennzeichnet, daß der Haltering (50) mit der Druckfläche (52) gegen die Kontaktfläche (54) des sich an der Stützfläche (56) abstützenden Kontaktrings (55) anlegbar ist.

12. Kabelverschraubung nach einem der voranstehenden Ansprüche, dadurch gekennzeichnet, daß die Druckfläche (52') des Halterings (50') eine elektrisch leitend mit dem Stutzen (10) verbundene Kontaktfläche bildet.

13. Kabelverschraubung nach Anspruch 12, dadurch gekennzeichnet, daß der Haltering (50') an der Stützfläche (56) des Stutzens (10) anliegt.

14. Kabelverschraubung nach einem der Ansprüche 6 bis 12, dadurch gekennzeichnet, daß die Gegenfläche (48) von dem Druckelement (44) gebildet ist.

## Revendications

1. Passe-câble à vis comprenant un embout (10) pouvant en particulier être fixé dans un carter, un élément à visser (26) pouvant être assemblé par vissage avec l'embout (10), et un anneau de retenue (50) qui peut être serré dans une chambre intérieure (41) de l'embout (10), entre l'élément à visser (26) et une surface d'appui (56) de l'embout (10), et qui peut être sollicité par l'élément à visser (26) en direction de la surface d'appui (56) et possède une surface de compression (52), l'embout (10), l'élément à visser (26) et l'anneau de retenue (50) étant adaptés à assurer le passage d'un câble (32) et, lors de la sollicitation de l'anneau de retenue (50) par l'élément à visser (26), à enserrer entre la surface de compression (52, 52') de l'anneau de retenue (50) et une surface conjuguée (54, 48), un blindage de câble (74) amené de la zone des conducteurs intérieurs (76) du câble vers l'extérieur, en vue d'établir une connexion conductrice sur le plan électrique, avec l'embout (10),
**caractérisé** en ce que l'anneau de retenue (50) comprend un élément de retenue pouvant y être monté et y être relié pour former un ensemble pouvant être monté au préalable, de façon telle que le blindage de câble (74) s'étendant par-dessus et au-delà de la surface de compression (52, 52') puisse être fixé à l'avance à l'anneau de retenue (50) au moyen de l'élément de retenue, et puisse ensuite être enserré lors de l'assemblage du passe-câble à vis.

2. Passe-câble à vis selon la revendication 1, **caractérisé** en ce que l'élément de retenue est un élément de serrage (94), qui est en mesure d'enserrer entre lui-même et l'anneau de retenue (50), le blindage de câble (74).

3. Passe-câble à vis selon la revendication 2, **caractérisé** en ce que l'anneau de retenue (50) présente un creux (86) dans lequel est en mesure de s'engager l'élément de serrage (94) en y comprimant le blindage de câble (74).

4. Passe-câble à vis selon l'une des revendications 2 ou 3, **caractérisé** en ce que l'anneau de retenue (50) s'étend de manière conique entre le creux (86) et la surface de compression (52).

5. Passe-câble à vis selon l'une des revendications précédentes, **caractérisé** en ce qu'un côté extérieur (82) de l'anneau de retenue (50) est adapté à la fixation du blindage de câble (74).

6. Passe-câble à vis selon l'une des revendications précédentes, **caractérisé** en ce qu'entre l'anneau de retenue (50) et l'élément à visser (26), est disposé un élément de compression (44).

7. Passe-câble à vis selon la revendication 6, **caractérisé** en ce que l'élément de compression (44) comprend un accumulateur de force élastique.

8. Passe-câble à vis selon la revendication 7, **caractérisé** en ce que l'élément de compression comprend un joint d'étanchéité (44) que peut traverser le câble (32).

9. Passe-câble à vis selon l'une des revendications précédentes, **caractérisé** en ce que la surface conjuguée est une surface de contact (54) reliée de manière électriquement conductrice avec l'embout (10).

10. Passe-câble à vis selon la revendication 9, **caractérisé** en ce que la surface de contact (54) est agencée sur un anneau de contact (55) qui se trouve dans la chambre intérieure et est relié de manière électriquement conductrice avec l'embout (10).

11. Passe-câble à vis selon la revendication 10, **caractérisé** en ce que l'anneau de retenue (50) peut venir s'appliquer avec la surface de compression (52), contre la surface de contact (54) de l'anneau de contact (55) s'appuyant sur la surface d'appui (56).

12. Passe-câble à vis selon l'une des revendications précédentes, **caractérisé** en ce que la surface de compression (52') de l'anneau de retenue (50') forme une surface de contact reliée de manière électriquement conductrice avec l'embout (10).

13. Passe-câble à vis selon la revendication 12, **caractérisé** en ce que l'anneau de retenue (50') vient s'appuyer sur la surface d'appui (56) de l'embout (10).

14. Passe-câble à vis selon l'une des revendications 6 à 12, **caractérisé** en ce que la surface conjuguée (48) est formée par l'élément de compression (44).

## Claims

1. A cable gland comprising a connecting piece (10), especially one fixable to a housing, a screw element (26) which is adapted to be screwed to the connecting piece, and a retaining ring (50), which is adapted to be held in an interior space (41) of the connecting piece (10) between the screw element (26) and a support surface (56) of the connecting piece (10), which can be pressed towards said support surface (56) by the screw element (26), and which comprises a pressure surface (52), whereby the connecting piece (10), the screw element (26) and the retaining ring (50) are suitable for feeding a cable (32) therethrough and for clamping a cable screen (74) which is borne outwardly of the inner conductor region (76) of the cable between the pressure surface (52, 52') of the retaining ring (50) and a counter surface (54, 48) by the application of pressure to the retaining ring (50) by the screw element (26) so as to establish an electrically conductive connection to the connecting piece (10), characterised in that the retaining ring (50) comprises a retaining element which is adapted to be placed thereon and is combinable therewith to form a pre-assembled unit in such a manner that the cable screen (74) extending over and beyond the pressure surface (52, 52') is prefixable to the retaining ring (50) by means of the retaining element and is thereafter clampable during the assembly of the cable gland.

2. A cable gland in accordance with Claim 1, characterised in that the retaining element is a clamping element (94) which enables the cable screen (74) to be firmly clamped between itself and the retaining ring (50).

3. A cable gland in accordance with Claim 2, characterised in that the retaining ring (50) comprises a depression (86) into which the cable screen (74) is inserted by virtue of the pressure exerted by the clamping element (94).

4. A cable gland in accordance with either of Claims 2 and 3, characterised in that the retaining ring (50) extends conically between the depression (86) and the pressure surface (52).

5. A cable gland in accordance with any of the preceding Claims, characterised in that an outer face (82) of the retaining ring (50) is suitable for fixing the cable screen (74).

6. A cable gland in accordance with any of the preceding Claims, characterised in that a pressure element (44) is arranged between the retaining ring (50) and the screw element (26).

7. A cable gland in accordance with Claim 6, characterised in that the pressure element (44) comprises a resilient energy storing means.

8. A cable gland in accordance with Claim 7, characterised in that the pressure element (44) comprises a seal (44) which is penetratable by the cable (32).

9. A cable gland in accordance with any of the preceding Claims, characterised in that the counter surface is a contact surface (54) which is connected in electrically conductive manner to the connecting piece (10).

10. A cable gland in accordance with Claim 9, characterised in that the contact surface (54) is arranged on a contact ring (55) which is located in the inner space of, and is connected in electrically conductive manner to, the connecting piece (10).

11. A cable gland in accordance with Claim 10, characterised in that the pressure surface (52) of the retaining ring (50) is adapted to abut against the contact surface (54) of the contact ring (55) which is supported on the support surface (56).

12. A cable gland in accordance with any of the preceding Claims, characterised in that the pressure surface (52') of the retaining ring (50') forms a contact surface which is connected to the connecting piece (10) in electrically conductive manner.

13. A cable gland in accordance with Claim 12, characterised in that the retaining ring (50') abuts the support surface (56) of the connecting piece (10).

14. A cable gland in accordance with any of the Claims 6 to 12, characterised in that the counter surface (48) is formed by the pressure element (44).
